# EUROPEAN PATENT APPLICATION

(11) **EP 4 672 775 A1**
(43) Date of publication of application: **31.12.2025**
(21) Application number: 24184315.0
(22) Date of filing: 25.06.2024
(51) Int. Cl.: H04Q 11/00

(54) **OPTIMIZING BANDWIDTH ALLOCATION IN AN OPTICAL NETWORK**

(71) Applicant: Nokia Solutions and Networks Oy, 02610 Espoo (FI)
(72) Inventor: TSIAFLAKIS, Paschalis, 2018 Antwerp (BE); MAES, Jochen, 2018 Antwerp (BE); BOSTOEN, Tom, 2018 Antwerp (BE); DROOGHAAG, Benoit, 2108 Antwerp (BE)
(74) Representative: IP HILLS NV

(57) **Abstract**

Example embodiments describe a computer-implemented method (300) for optimizing bandwidth allocation within a point-to-multipoint, P2MP, optical network (100) comprising a central network node (110) configured to communicate with client network nodes (130, 140, 150); wherein transmission opportunities (133, 142, 143, 144, 154, 155) between the respective client network nodes and the central network node are allocated according to dynamic bandwidth allocation based on bandwidth demands of the respective client network nodes and constrained by traffic descriptor parameter values of the respective client network nodes; the computer-implemented method comprising: obtaining (301) one or more network metrics (310) indicative for a network architecture of the P2MP optical network or a network utilization of the P2MP optical network; and, if (302) at least one network metric meets a trigger criterion, updating (303) one or more of the traffic descriptor parameter values to a new value based on one or more of the network metrics.

## Description

### Field of the Invention

Various example embodiments relate to dynamic bandwidth allocation, DBA, in a point-to-multipoint, P2MP, optical network. In particular, example embodiments relate to a computer-implemented method for optimizing bandwidth allocation within a P2MP optical network.

### Background of the Invention

Dynamic bandwidth allocation, DBA, is a functionality in point-to-multipoint, P2MP, optical networks such as passive optical networks, PONs, that dynamically allocates transmission opportunities to traffic-bearing entities of client network nodes. An operator typically provisions one or more traffic descriptor parameters for a traffic-bearing entity that ensures the quality of service by imposing constraints on the assigned bandwidth and the latency. The assigned bandwidth or assigned data rate of a traffic-bearing entity is typically determined based on the current ingress activity of the traffic-bearing entities, i.e. the bandwidth demand, and the bandwidth-related traffic descriptor parameters, e.g. fixed bandwidth, assured bandwidth, and maximum bandwidth.

The assigned bandwidth typically includes a guaranteed bandwidth portion and an additional bandwidth portion, also referred to as non-guaranteed bandwidth portion. The non-guaranteed bandwidth portion is assigned after assigning the guaranteed bandwidth portion to the traffic-bearing entities and is only assigned to unsaturated traffic-bearing entities for which the guaranteed bandwidth portion is insufficient to fulfil their bandwidth demand.

The traffic descriptor parameters are typically fixed, i.e. static over the lifetime of a traffic-bearing entity. This results in suboptimal performance of the optical network as the network requirements and active applications serviced by the client network nodes may vary over time.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to improve dynamic bandwidth allocation in a point-to-multipoint, P2MP, optical network.

This object is achieved, according to a first example aspect of the present disclosure, by a computer-implemented method for optimizing bandwidth allocation within a point-to-multipoint, P2MP, optical network comprising a central network node configured to communicate with client network nodes; wherein transmission opportunities between the respective client network nodes and the central network node are allocated according to dynamic bandwidth allocation based on bandwidth demands of the respective client network nodes and constrained by traffic descriptor parameter values of the respective client network nodes; the computer-implemented method comprising:
- obtaining one or more network metrics indicative for a network architecture of the P2MP optical network or a network utilization of the P2MP optical network; and
- if at least one network metric meets a trigger criterion, updating one or more of the traffic descriptor parameter values to a new value based on one or more of the network metrics.

The computer-implemented method thus allows dynamically adjusting one or more traffic descriptor parameter values based on one or more network metrics. In doing so, the performance of the P2MP optical network can be improved as the traffic descriptor parameter values can be optimized according to the changing network requirements and active applications serviced by the client network nodes.

The updated traffic descriptor parameter values may be associated with one or more client network nodes in the P2MP optical network. For example, one or more traffic parameter values of a single traffic-bearing entity of a client network node may be updated, one or more traffic parameter values of a plurality of traffic-bearing entities of a single client network node may be updated, one or more traffic parameter values of a plurality of traffic-bearing entities of a plurality of client network nodes may be updated, or one or more traffic parameter values of all traffic-bearing entities of all client network nodes may be updated.

To this end, one or more network metrics are tracked or monitored. The one or more network metrics may be obtained from data communications between the central network node and client network nodes, and/or from the network. A network metric may be indicative for a network architecture of the P2MP optical network. The network architecture of a P2MP optical network refers to the overall design and configuration of the optical network, including the implemented protocols, equipment, physical arrangement of the network components, and management mechanisms. In other words, it includes the topology, technical specifications, and standards that govern the operation of the optical network. Alternatively, a network metric may be indicative for a network utilization of the P2MP optical network. Network utilization refers to how effectively, and to what extent, the available bandwidth or capacity of the optical network is being used.

The monitored network metrics are then compared to a trigger condition. The trigger condition may, for example, be a threshold value for a certain network metric or an event such as a client network node that joins the P2MP optical network. If a trigger condition is met, new values are determined for one or more of the traffic descriptor parameter values based on the monitored network metrics. These traffic descriptor parameter values are then updated to the newly determined values.

These updated values may be made accessible to a typical dynamic bandwidth allocation, DBA, engine, which is configured to allocate transmission opportunities and bandwidths to the respective client network nodes within the P2MP optical network based on their bandwidth demands and constrained by the traffic descriptor parameter values. Thus, updating the traffic descriptor parameter values allows improving or optimizing the bandwidths allocated by the DBA engine. The computer-implemented method thus allows optimizing the bandwidth allocation in a P2MP optical network in a transparent manner to the DBA engine. This has the advantage that the computer-implemented method can easily be implemented in existing P2MP optical networks with DBA.

Dynamically updating the traffic descriptor parameters according to network metrics can improve the quality of service, bandwidth efficiency, throughput, latency and/or energy efficiency of the P2MP optical network. This allows avoiding excessively conservative bandwidth allocations that limit the quality of service of end-users needlessly, e.g. due to provisioning fixed traffic descriptor parameters to cover a worst-case network configuration. Dynamically updating the traffic descriptor parameter values according to network metrics further allows optimizing the allocated bandwidth according to changing network requirements and active applications at the end-user side. This is an advantage as the optimal traffic descriptor values highly depend on the changing active applications or services at the end-user side and it is thus a problem to provision optimal fixed traffic descriptor parameter values.

The computer-implemented method may be performed by a controller circuitry or control unit within the central network node. Alternatively, the computer-implemented method may be performed as a software routine within a DBA engine. Alternatively, the computer-implemented method may be performed at a centralized location, e.g. on a cloud computing server or on a software defined networking controller.

According to an example embodiment, the computer-implemented method may further comprise iteratively obtaining the one or more network metrics and iteratively checking if at least one network metric meets the trigger criterion; or performing the updating as an interrupt service routine that is triggered if at least one network metric meets the trigger criterion.

Updating one or more of the traffic descriptor parameter values may thus be achieved by polling or by an interrupt-based system. Polling may include checking if the at least one network metric meets the trigger condition at regular intervals. An interrupt-based system may include executing an interrupt service routine, ISR, when a trigger condition is met, e.g. after receiving an interrupt signal. The ISR may perform the updating of the one or more traffic descriptor values. Alternatively or complementary, the ISR may invoke one or more callback functions to perform the updating of the one or more traffic descriptor values. An interrupt-based system has the advantage that it is more responsive and more computationally efficient as no computing time is wasted to check the trigger condition continuously.

According to an example embodiment, the respective client network nodes may comprise at least one traffic-bearing entity, and upstream transmission opportunities for transmitting data from the at least one traffic-bearing entity to the central network node may be allocated according to dynamic bandwidth allocation based on the bandwidth demand of the at least one traffic-bearing entity and constrained by traffic descriptor parameter values of the at least one traffic-bearing entity.

According to an example embodiment, downstream transmission opportunities for transmitting data from the central network node to the client network nodes are allocated according to dynamic bandwidth allocation based on the bandwidth demands of the respective client network nodes constrained by traffic descriptor parameter values of the respective client network nodes.

It will be apparent that traffic descriptor parameters for dynamically allocating downstream bandwidth, i.e. downstream traffic descriptors, may be distinct from the traffic descriptor parameters for dynamically allocating upstream bandwidth, i.e. upstream traffic descriptors.

According to an example embodiment, updating one or more of the traffic descriptor parameter values further comprises adjusting the one or more traffic descriptor parameter values stored in a memory.

Typically, a DBA engine is configured to allocate bandwidth to the respective client network nodes based on traffic descriptor parameter values stored in a memory. By updating these stored traffic descriptor parameter values within the memory, the updated values are made accessible to the DBA. The updated traffic descriptor parameter values are thus promptly taken into account by the DBA engine when allocating the bandwidth during a next DBA cycle. Thus, the updating of the traffic descriptor values, and the resulting optimization of the dynamic bandwidth allocation, can be transparent to the DBA engine.

According to an example embodiment, the one or more network metrics are selected from a group comprising:
- a number of active client network nodes within the P2MP optical network;
- at least one data volume consumption of a client network node, indicative for an amount of data transferred between the client network node and the central network node during a respective predetermined period;
- service information indicative for an application serviced by a client network node;
- a queue fill indicative for an occupancy within a queue of a client network node or the central network node;
- a time of day; and
- a switching state of an optical distribution network, ODN, indicative for a configuration of the optical connections between the client network nodes and the central network node.

An active client network node refers to a client network node that is operational within the P2MP optical network, i.e. a client network node that has been initialized to join the optical network, a client network node that has active downstream transmissions, or a client network node that has active upstream data transmissions. Non-operational or inactive client network nodes may refer to client network nodes that are connected to the optical network but are switched off, client network nodes that are connected to the optical network but have not joined the network yet, and optical fibre ends for connecting client network nodes that are not connected to a client network node.

The data volume consumption of a client network node may sometimes also be referred to as bandwidth usage. One or more data volume consumptions may be obtained for a single client network node during respective predetermined periods. For example, a data volume consumption of a client network node may be obtained during an hourly period, a daily period, a weekly period, and a monthly period. It will be apparent that these periods of data volume consumption may partially overlap.

The queue fill of a client network node or traffic-bearing entity may be obtained through logical buffer occupancy reports that are solicited by the central network node and provided by the client network node, e.g. dynamic bandwidth report upstream, DBRu, according to the ITU-T G.9807.1 standard. This reported buffer occupancy provides the status information of the data queue in a client network node or a traffic-bearing entity within the node, e.g. queue fill or queue size. In other words, the computer-implemented method may comprise receiving buffer occupancy reports to obtain the queue fill as a network metric. It will be apparent that similar logical buffer occupancy reports may be used to obtain a queue fill for burst mode downstream communication.

According to an example embodiment, the one or more traffic descriptor parameters may be selected from a group comprising:
- a fixed bandwidth indicative for a portion of the available bandwidth within the P2MP optical network assigned to a client network node regardless of its bandwidth demand;
- an assured bandwidth indicative for a portion of the available bandwidth within the P2MP optical network assigned to a client network node according to its bandwidth demand;
- a maximum bandwidth indicative for a maximum portion of the available bandwidth within the P2MP optical network assignable to a client network node;
- a priority for non-guaranteed bandwidth assignment indicative for the relative precedence of assigning additional bandwidth to a client network node under network congestion;
- a weight for non-guaranteed bandwidth assignment indicative for the distribution of additional bandwidth to client network nodes with the same priority;
- a jitter tolerance;
- a bandwidth assignment delay tolerance;
- a switching delay tolerance; and
- a delay tolerance indicative for a maximum time between consecutive upstream transmission opportunities of a client network node.

According to an example embodiment, updating one or more of the traffic descriptor parameter values may comprise determining new values for the fixed bandwidth and the assured bandwidth based on the number of active client network nodes within the P2MP optical network such that a sum of the fixed bandwidth and the assured bandwidth is maximized for the respective active client network nodes while an aggregate of the fixed and assured bandwidths within the P2MP optical network is at most equal to a total available bandwidth within the P2MP optical network.

The fixed bandwidth is assigned regardless of the bandwidth demand of a client network node or traffic-bearing entity. The assured bandwidth may be assigned on top of the fixed bandwidth if the fixed bandwidth does not satisfy the bandwidth demand of the client network node or traffic-bearing entity. The assured bandwidth is upper bound by a provisioned level according to an assured bandwidth traffic descriptor parameter. The sum of the fixed bandwidth and the assured bandwidth may be referred to as the guaranteed assigned bandwidth. Provisioning a high level for the assured bandwidth traffic descriptor parameter results in a better quality of service, QoS, for a client network node.

The respective guaranteed assigned bandwidths of the client network nodes within the optical network may be maximized based on the number of active client network nodes within the P2MP optical network by dynamically updating the fixed bandwidth and/or assured bandwidth. This improves the QoS of the client network nodes as it avoids allocating bandwidth to non-operational or inactive client network nodes. By upper bounding the aggregate of the guaranteed assigned bandwidths to the total available bandwidth within the P2MP optical network, the guaranteed assigned bandwidths can always be ensured to the client network nodes.

According to an example embodiment, obtaining one or more network metrics may comprise obtaining the data volume consumption during a predetermined period of the respective client network nodes; and wherein one or more of the traffic descriptor parameter values are updated so as to reduce a bandwidth allocated to a client network node, if the data volume consumption during a predetermined period of said client network node exceeds an upper threshold for the data volume consumption during a predetermined period and the P2MP optical network is congested or at risk of becoming congested.

In other words, the computer-implemented method may comprise tracking the data volume consumption of all central network nodes or traffic-bearing entities in the optical network during a predetermined period. This allows detecting congestion or predicting if congestion is likely to occur within the optical network. This further allows detecting heavy users over a period of time, i.e. client network nodes that exceed an upper threshold for the data volume consumption over a period of time. When the network is congested or at risk of becoming congested, one or more traffic descriptor parameter values of such heavy users can be updated to reduce the bandwidth allocated to the heavy user. This allows deprioritizing the heavy user in the upstream, thereby avoiding QoS decrease for the other users in the optical network.

This can be achieved by assigning a lower priority or weight to a heavy user in the dynamic bandwidth allocation, e.g. lowering the priority for best effort bandwidth assignment or weight for best effort assignment according to the ITU-T G.9807.1 standard. This allows reducing the non-guaranteed bandwidth when the network is congested or at risk of being congested. Alternatively, deprioritizing the heavy user can be achieved by an initial increase or scaling of the fixed bandwidth traffic descriptor parameter and/or the assured bandwidth traffic descriptor parameter and/or the maximum bandwidth traffic descriptor parameter for all client network nodes. This allows preventively reducing the fixed bandwidth traffic descriptor parameter and/or the assured bandwidth traffic descriptor parameter and/or the maximum bandwidth traffic descriptor parameter of the heavy user when the network is at risk of congestion while respecting the assured bandwidth and maximum bandwidth. This allows implementing bandwidth sharing optimization in the upstream.

The computer-implemented method may also comprise tracking the data volume consumption by one or more central network nodes or traffic-bearing entities and updating one or more traffic descriptor parameter values if the upper threshold for the data volume consumption is reached. The upper threshold may be different for the respective client network nodes or traffic-bearing entities, e.g. depending on the maximum data volume associated to an internet subscription of the end-user serviced by the client network node. Updating the one or more traffic descriptor parameter values may, for example, include reducing the maximum bandwidth, reducing the priority for non-guaranteed bandwidth assignment, reducing the weight for non-guaranteed bandwidth assignment, reducing the assured bandwidth traffic descriptor parameter, or reducing the fixed bandwidth.

According to an example embodiment, updating one or more of the traffic descriptor parameter values may comprise increasing the assured bandwidth or the maximum bandwidth of the client network nodes with a bandwidth usage below the upper threshold.

In other words, the assured bandwidth or maximum bandwidth may be increased for the normal users, i.e. the non-heavy users. This allows implementing bandwidth sharing optimization in the upstream.

According to an example embodiment, updating one or more of the traffic descriptor parameter values may be biased by a user preference for higher bandwidth or better latency.

A user may, for example, indicate a preference for higher bandwidth or better latency performance. The computer-implemented method may comprise receiving such user preferences, e.g. from a mobile app or a web interface. One or more traffic descriptor parameters may then be updated based on this user preference as to provide the desired higher bandwidth or better latency performance.

According to an example embodiment, one or more traffic descriptor parameter values may be updated as to reduce the dynamically allocated bandwidth of one or more client network nodes during a predetermined period.

The predetermined period may be a period of lower expected network activity, e.g. overnight or during weekends. Updating the one or more traffic descriptor parameter values may thus be based on a time schedule indicative for when lower or higher bandwidth assignments are desired, i.e. the time schedule may define the trigger events. Tracking the time of day as a network metric then allows updating one or more traffic descriptor parameter values according to the time schedule. For example, some operators desire a lower bandwidth assignment overnight to reduce the energy consumption of the P2MP optical network, as the activity on the network is lower anyhow. The traffic descriptor values may also be changed during weekdays relative to weekends or based on an upcoming event such as an important broadcast event or software release.

According to an example embodiment, the P2MP optical network is a passive optical network, PON, comprising an optical line terminal, OLT, configured to communicate with optical network units, ONUs; and wherein the OLT comprises means configured to dynamically allocate bandwidth to the ONUs based on bandwidth demands of the respective ONUs and constrained by traffic descriptor parameter values of the respective ONUs.

According to a second example aspect, the invention relates to a data processing system configured to perform the computer-implemented method according to the first aspect.

According to a third example aspect, the invention relates to a computer program comprising instructions which, when the program is executed by a computer, cause the computer to perform the computer implemented method according to the first aspect.

According to a fourth example aspect, the invention relates to a computer-readable medium comprising instructions which, when executed by a computer, cause the computer to perform the computer implemented method according to the first aspect.

According to a fifth example aspect, the invention relates to a central network node configured to communicate with client network nodes within a point-to-multipoint, P2MP, optical network; wherein transmission opportunities between the respective client network nodes and the central network node are allocated according to dynamic bandwidth allocation based on bandwidth demands of the respective client network nodes and constrained by traffic descriptor parameter values of the respective client network nodes; and wherein the central network node comprises means configured to perform:
- obtaining one or more network metric indicative for a network architecture of the P2MP optical network or a network utilization of the P2MP optical network; and
- if at least one network metric meets a trigger criterion, updating one or more of the traffic descriptor parameter values to a new value based on one or more of the network metrics.

According to an example embodiment, the central network node may be an optical line terminal, OLT, configured to communicate with optical network units, ONUs, within a passive optical network, PON.

### Brief Description of the Drawings

Fig. 1 shows a schematic block diagram of an example point-to-multipoint, P2MP, optical network, in particular a passive optical network, PON;
Fig. 2 shows steps performed by a typical dynamic bandwidth allocation, DBA, algorithm and the resulting assigned bandwidths;
Fig. 3 shows steps of a computer-implemented method for optimizing bandwidth allocation within a P2MP optical network by dynamically updating one or more traffic descriptor parameter values, according to example embodiments; and
Fig. 4 shows a suitable computing system enabling to implement embodiments of the computer-implemented method for optimizing bandwidth allocation within a P2MP optical network.

### Detailed Description of Embodiment(s)

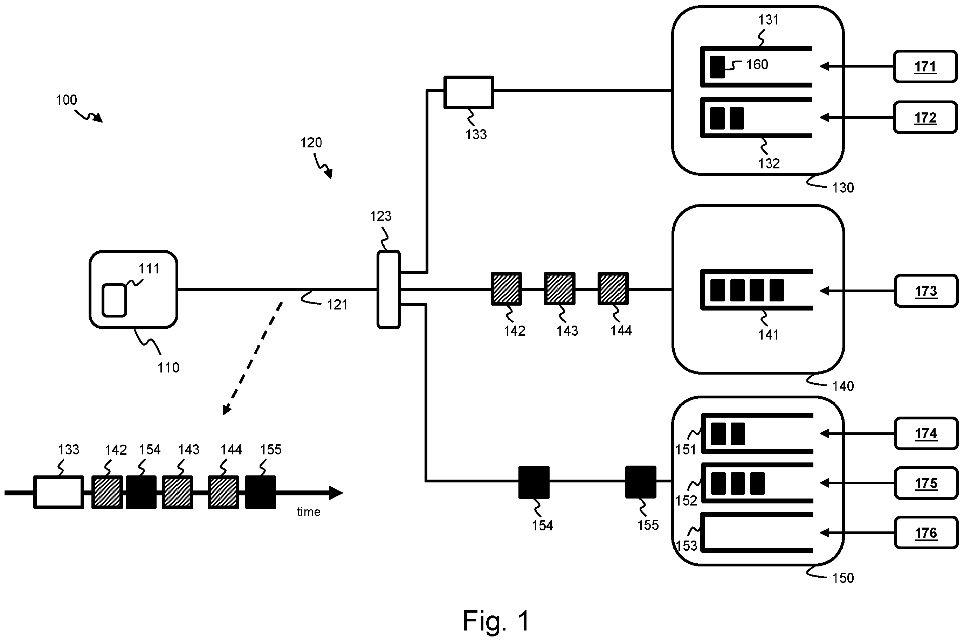

Fig. 1 shows a schematic block diagram of an example point-to-multipoint, P2MP, optical network, in particular a passive optical network, PON 100. The PON comprises an optical line terminal, OLT, 110 connected to a plurality of optical network units, ONUs, 130, 140, 150 via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical signals coming from the connected ONUs 130, 140, 150 into a burst signal for the OLT 110. In this example, the OLT 110 is connected to three ONUs 130, 140, 150, however, the OLT 110 may be connected to fewer or more client network nodes.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time-and wavelength-division multiplexing, TWDM.

In time-division multiplexing, TDM, the telecommunication medium 121 is shared in time between the ONUs 130, 140, 150 in the upstream. To this end, transmission opportunities 133, 142, 143, 144, 154, 155 are allocated to the respective ONUs 130, 140, 150 during which the respective ONUs 130, 140, 150 are allowed to transmit data to the OLT 110. Transmission opportunities may also be referred to as timeslots or bursts. For example, ONU 140 is allowed to transmit upstream data during the transmission opportunities 142, 143, 144.

The respective ONUs 130, 140, 150 comprise one or more traffic-bearing entities 131, 132, 141, 151, 152, 153 where data packets 160 originating from a connected service 171 - 176 or application await their turn to be transmitted to the OLT 110. The one or more traffic-bearing entities 131, 132, 141, 151, 152, 153 may be transmission containers, also referred to as T-CONTs. Transmission containers are ONU-objects that represent a group of logical connections within an ONU 130, 140, 150 that appear as a single entity for the purpose of upstream bandwidth assignment in a passive optical network.

The transmitted data during a transmission opportunity 133, 142, 143, 144, 154, 155 may thus originate from traffic-bearing entities 131, 132, 141, 151, 152, 153 within the associated ONUs 130, 140, 150. A respective traffic-bearing entity 131, 141, 151 is allowed to transmit data to the OLT 110 during a dedicated transmission opportunity 133, 142, 143, 144, 154, 155 that may recur in time, i.e. during a repeating timeslot. In between consecutive transmission opportunities associated with a certain traffic-bearing entity, e.g. 154 and 155, one or more non-overlapping transmission opportunities associated with different transmission queues may be allocated, e.g. 143 and 144.

Transmission opportunities associated with different traffic-bearing entities within the same ONU, e.g. transmission queues 131 and 132, may occur subsequently (not shown in Fig. 1), i.e. may follow each other in time. This can allow to only transmit one preamble for those subsequent traffic-bearing entities. For example, an upstream burst may include a single preamble for one or more transmission opportunities associated with different traffic-bearing entities within the same optical network unit, ONU. It will be apparent that the transmission opportunities 133, 142, 143, 144, 154, 155 shown in Fig. 1 are associated with traffic-bearing entities in the respective ONUs 130, 140, 150.

The transmission opportunities 133, 142, 143, 144, 154, 155 may be allocated by dynamic bandwidth allocation, DBA, sometimes also referred to as dynamic bandwidth assignment. To this end, the OLT 110 may comprise a DBA engine 111 or DBA functional module that executes a DBA algorithm. The DBA engine 111 may determine or estimate a buffer occupancy of the traffic-bearing entities 131, 132, 141, 151, 152, 153 by collecting in-band status reports, by monitoring upstream frames, or both. The DBA algorithm may implement a DBA model that defines how the assigned bandwidth for the traffic-bearing entities 131, 132, 141, 151, 152, 153 is to be determined, e.g. according to the reference DBA model of the ITU-T G.9807.1 standard. The DBA engine 111 typically also determines the size and timing of the upstream transmission opportunities 133, 142, 143, 144, 154, 155 such that the determined bandwidths are allocated to the traffic-bearing entities 131, 132, 141, 151, 152, 153.

The DBA engine 111 dynamically allocates bandwidth to the respective traffic-bearing entities 131, 132, 141, 151, 152, 153 based on their current bandwidth demands and the provisioned traffic descriptor parameters of the respective traffic bearing entities. The bandwidth demands may be determined based on a reported buffer occupancy, e.g. dynamic bandwidth report upstream, DBRu, according to the ITU-T G.9807.1 standard. Alternatively, the bandwidth demands may be determined based on monitored traffic from a respective ONU or T-CONT, e.g. based on the amount of payload data transmitted during one or more transmission opportunities, and/or idle data. The transmission opportunities determined by the DBA engine are then communicated to the ONUs in-band within a bandwidth map.

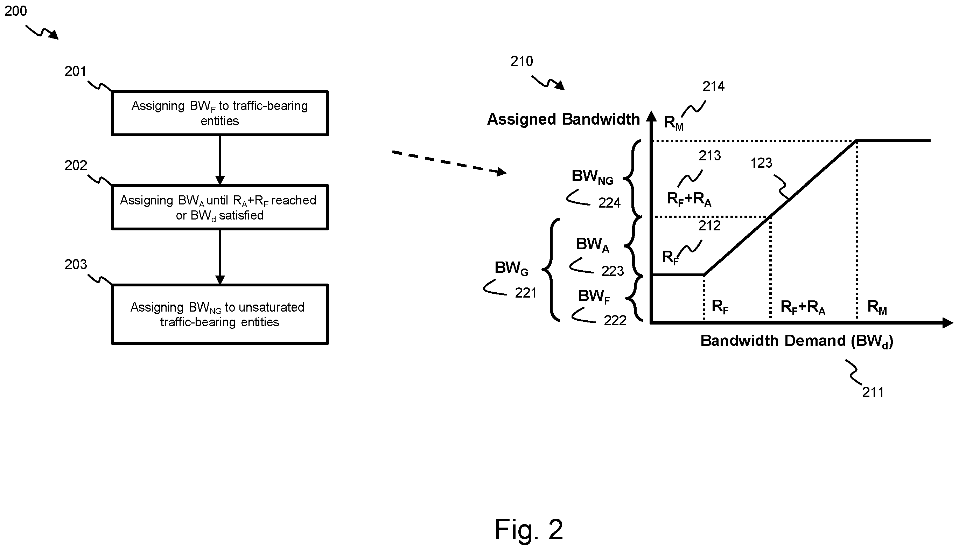

Fig. 2 shows steps 200 performed by a typical DBA algorithm and the resulting assigned bandwidths 210. A typical DBA algorithm implements, for example, the DBA reference model of the ITU-T G9807.1 standard. In a first step 201, a fixed bandwidth 222 is assigned to all traffic-bearing entities in the PON according to a fixed bandwidth traffic descriptor parameter *R_{F}* 212. The fixed bandwidth *BW_{F}* 222 is assigned regardless of the bandwidth demand 211 of the traffic-bearing entities. In a following step 202, an assured bandwidth *BW_{A}* 223 may be assigned on top of the fixed bandwidth *BW_{F}* 222 if the fixed bandwidth *BW_{F}* 222 does not satisfy the bandwidth demand 211 of the traffic-bearing entities. The assured bandwidth *BW_{A}* 223 is upper bound by a provisioned level, i.e. *R_{F}* + *R_{A}* 213, according to an assured bandwidth traffic descriptor parameter *R_{A}*. The fixed bandwidth *BW_{F}* 222 and the assured bandwidth *BW_{A}* 223 together are typically referred to as the guaranteed assigned bandwidth 221 *BW_{G} = BW_{F}* + *BW_{A}.*

If the guaranteed assigned bandwidth *BW_{G}* 221 still does not satisfy the bandwidth demand 211 of a traffic-bearing entity, a non-guaranteed bandwidth *BW_{NG}* 224 may be assigned in step 203. Such a traffic-bearing entity may be referred to as an unsaturated traffic-bearing entity. The non-guaranteed bandwidth *BW_{NG}* 224 may also be referred to as the additional bandwidth 224. The non-guaranteed bandwidth *BW_{NG}* 224 is upper bound by a provisioned level, i.e. the maximum bandwidth 214. The maximum bandwidth for a traffic-bearing entity is typically provisioned as a maximum bandwidth traffic descriptor parameter *R_{M}* 214. The non-guaranteed bandwidth *BW_{NG}* 224 typically includes non-assured bandwidth or best-effort bandwidth. Non-assured bandwidth has a higher priority than best-effort bandwidth. If the PON bandwidth capacity that remains after assigning the guaranteed bandwidth *BW_{G}* 221 is insufficient to satisfy the bandwidth demand 211 of the traffic-bearing entities by assigning non-assured bandwidth and/or best-effort bandwidth, i.e. when there is congestion in the PON, a fairness model is applied to fairly distribute the remaining PON bandwidth capacity among the unsaturated traffic-bearing entities. Additional traffic descriptor parameters may be provisioned that are related to latency, e.g. a delay tolerance, DT, or a jitter tolerance. The DT traffic descriptor parameter is indicative of the desired maximum time between consecutive upstream transmissions. Further traffic descriptor parameters may be provisioned such as, for example, a bandwidth assignment delay tolerance, and a switching delay tolerance.

Traffic descriptor parameter values are typically provisioned by an operator at initialization of an ONU or traffic-bearing entity. This has the problem that the traffic descriptor parameter values are typically fixed, i.e. static over the lifetime of a traffic-bearing entity. This can result in suboptimal performance of the optical network as the network requirements and active applications serviced by the ONUs or traffic-bearing entities may vary over time. For example, an operator may configure the guaranteed bandwidth *BW_{G}* 221 of an ONU or traffic-bearing entity by provisioning the fixed and assured bandwidth traffic descriptor parameter values, i.e. *R_{F}* + *R_{A}* 213. These values are typically determined such that the guaranteed bandwidth *BW_{G}* 221 can be assigned to the ONU or traffic-bearing entity when the maximum number of ONUs or traffic-bearing entities are active in the network, resulting in a relatively small value for the guaranteed bandwidth of each ONU or traffic-bearing entity. Typically, only a smaller number of ONUs are active in a network simultaneously, meaning that the guaranteed bandwidth *BW_{G}* 221 for the active ONUs could have been configured at a larger value, thereby improving the QoS.

It is a further challenge for the operator to know the optimal traffic descriptor parameter values as this heavily depends on the active applications serviced by the ONUs or traffic-bearing entity, which may change over time. It is a further challenge that the network requirements may change over time, i.e. according to the time-of-day, time-of-year, or in case of occasional events.

It can thus be desirable to dynamically adjust one or more traffic parameter values according to the changing network requirements and active applications service by client network nodes.

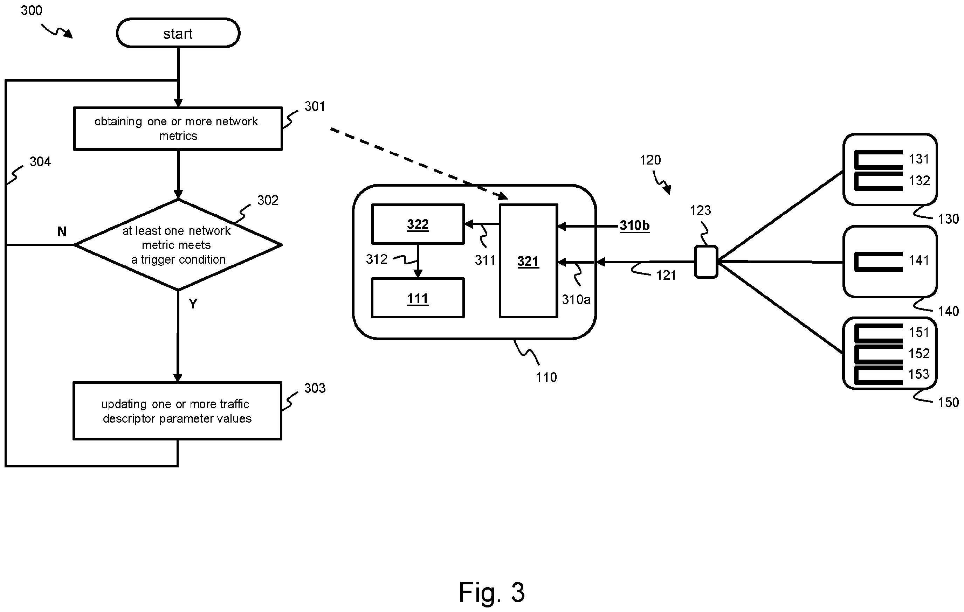

Fig. 3 shows steps 300 of a computer-implemented method for optimizing bandwidth allocation within a PON by dynamically updating one or more traffic descriptor parameter values, according to example embodiments. The computer-implemented method 300 may be performed by a controller circuitry 321 or control unit within an OLT 110. Alternatively, the computer-implemented method may be performed as a software routine within a DBA engine 111. Alternatively, the computer-implemented method may be performed at a centralized location (not shown in Fig. 3), e.g. on a cloud computing server or on a software defined networking controller.

In a first step 301, one or more network metrics 310a, 310b are obtained. The network metrics 310a, 310b may be obtained from data communications with the ONUs, i.e. 310a, and/or from the network, i.e. 310b. The network metrics 310a, 310b may be reported or may be determined from measurements and/or reported values. A network metric 310a, 310b may be indicative for a network architecture of the PON. The network architecture of the PON refers to the overall design and configuration of the optical network, including the implemented protocols, equipment, physical arrangement of the network components, and management mechanisms. In other words, it includes the topology, technical specifications, and standards that govern the operation of the optical network.

A network metric 310a, 310b indicative for a network architecture of the PON may be the number of active ONUs 130 - 150 within the PON, or the number of traffic-bearing entities 131, 132, 141, 151, 152, 153 within the active ONUs. An active ONU 130 - 150 refers to an ONU that is operational within the PON, i.e. an ONU that has been initialized and has joined the PON, an ONU that has active downstream transmissions, or an ONU that has active upstream data transmissions. Non-operational or inactive ONUs (not shown in Fig. 3) may refer to ONUs that are connected to the optical network but are switched off, ONUs that are connected to the optical network but have not joined the network yet, and optical fibre ends for connecting ONUs that are not connected to an ONU.

A network metric 310a, 310b indicative for a network architecture of the PON may also be service information indicative for an application serviced by an ONU 130 - 150, or traffic-bearing entity 131, 132, 141, 151, 152, 153.

A network metric 310a, 310b indicative for a network architecture of the PON may also be a switching state of the ODN 120 indicative for a configuration of the optical connections between the ONUs 130 - 150 and the OLT 110. The switching state of the ODN 120 may be monitored when ODN switching is implemented in the PON. ODN switching is a technique where an optical switch (not shown in Fig. 3) is coupled to multiple OLT 110 ports on one side, and two or more ODNs belonging to different PONs on the other side. This allows optically switching between servicing two or more ODNs by a single shared OLT port when traffic activity is low, and servicing two ODNs by respective OLT ports when traffic activity is high.

Alternatively, a monitored network metric 310a, 310b may be indicative for a network utilization of the PON. Network utilization refers to how effectively, and to what extent, the available bandwidth or capacity of the optical network is being used. A network metric 310a, 310b indicative for a network utilization may be a data volume consumption of an ONU 130 - 150 or traffic-bearing entity 131, 132, 141, 151, 152, 153 indicative for an amount of data transferred between the ONU or traffic-bearing entity and the OLT 110 during a predetermined period; a bandwidth usage of an ONU 130 - 150 or traffic-bearing entity 131, 132, 141, 151, 152, 153, indicative for a portion of the available bandwidth within the PON utilized by the ONU or traffic-bearing entity; and a queue fill indicative for an occupancy within the traffic-bearing entity 131, 132, 141, 151, 152, 153 of an ONU 130, 140, 150.

Obtaining the queue fill may be achieved by means of buffer occupancy reports. Buffer occupancy reports, e.g. dynamic bandwidth report upstream, DBRu, according to the ITU-T G.9807.1 standard, may be solicited by the OLT 110 and provided by the ONUs 130, 140, 150. Such a reported buffer occupancy provides the status information of the T-CONT in the ONU, e.g. queue fill or queue size. In other words, the computer-implemented method may comprise receiving buffer occupancy reports to determine the queue fill of the traffic-bearing entities 131, 132, 141, 151, 152, 153.

In a second step 302, the computer-implemented method may comprise evaluating whether at least one network metric 310a, 310b meets a trigger condition. In other words, the tracked network metrics are compared against a trigger condition. The trigger condition may, for example, be a threshold value for a certain network metric or an event such as a client network node that joins the P2MP optical network. It will be apparent that a plurality of different trigger conditions may be evaluated, e.g. respective trigger conditions for the monitored network metrics 310a, 310b.

If no trigger condition is met, the computer-implemented method may return 304 to step 301 to obtain a next set of network metrics. Alternatively, the computer-implemented method may only be performed once, e.g. upon command by an operator or upon initialization of an ONU. It will be apparent that, in the latter case, iterative loop 304 is not performed.

If a trigger condition is met in step 302, the computer-implemented method proceeds to step 303. In step 303, new values are determined for one or more traffic descriptor parameter values based on the monitored network metrics 310a, 310b. It will be apparent that the new value for a traffic descriptor parameter value may be determined based on a subset of the monitored network metrics 310a, 310b. The updated one or more traffic descriptor parameters may be a fixed bandwidth traffic descriptor parameter, an assured bandwidth traffic descriptor parameter, a maximum bandwidth traffic descriptor parameter, a priority for non-guaranteed bandwidth assignment, a weight for non-guaranteed bandwidth assignment, a jitter tolerance, a bandwidth assignment delay tolerance, a switching delay tolerance, or a delay tolerance, DT. It will be apparent that the updated traffic descriptor parameter values may be associated to one or more traffic-bearing entities of a single ONU, a plurality of ONUs, or all ONUs within the network, e.g. updating the fixed bandwidth for the traffic-bearing entities of ONU 130 or updating the fixed bandwidth for the traffic-bearing entities of ONUs 130, 140, and 150. It will further be apparent that different traffic descriptor parameter values may be updated for the traffic-bearing entities of the respective ONUs, e.g. updating the maximum bandwidth for a traffic-bearing entity of a first ONU and updating the fixed bandwidth for a traffic-bearing entity of another ONU.

The values of these traffic descriptor parameter values are then updated to the newly determined values. These updated values may be made accessible for a typical DBA engine 111. This can be achieved by adjusting 311 the value of the updated traffic descriptor parameters in a memory 322 that is accessed 312 by the DBA engine 111 when allocating bandwidths. By updating 311 stored traffic descriptor parameter values within the memory 322, the updated values are made accessible 312 to the DBA engine 111 with limited reconfigurations of the DBA engine 111. The updated traffic descriptor parameter values are thus taken into account by the DBA engine 111 when allocating the bandwidth during a next DBA cycle. Thus, the updating of the traffic descriptor values, and the resulting optimization of the dynamic bandwidth allocation can be transparent to the DBA engine. This has the advantage that the computer-implemented method can easily be implemented in existing PONs with DBA.

Steps 301 and 302 may be performed iteratively. This can be achieved by polling at regular intervals, i.e. obtaining 301 one or more network metrics 310a, 310b and checking 302 if the at least one network metric meets the trigger condition at regular intervals. Alternatively, this can be achieved by an interrupt-based system which includes executing an interrupt service routine, ISR, when a trigger condition is met. The ISR may perform the updating 303 of the one or more traffic descriptor values based on the monitored network metrics 310a, 310b. Alternatively or complementary, the ISR may invoke one or more callback functions to perform the updating 303 of the one or more traffic descriptor values. An interrupt-based system has the advantage that it is more responsive and more computationally efficient as no computing time is wasted to check the trigger condition continuously.

This dynamic updating of the traffic descriptor parameters can improve the quality of service, bandwidth efficiency, throughput, latency and/or energy efficiency of the optical network compared to fixed traffic descriptor parameters, as excessively conservative bandwidth allocations that limit the quality of service of end-users needlessly can be avoided and the traffic descriptor parameter values can be adapted to the changing network requirements and active applications at the end-user side.

According to a first example embodiment, traffic descriptor parameters can be dynamically updated to adjust the guaranteed bandwidth *BW_{G}* 221 that can be assigned to ONUs or T-CONTs. This may include updating the fixed bandwidth traffic descriptor and/or the assured bandwidth traffic descriptor. Some operators use a dedicated traffic descriptor parameter to configure the sum of the fixed and assured bandwidth traffic descriptor parameter values, sometimes referred to as the assured information rate, AIR.

Configuring a higher value for AIR results in a better QoS for the associated T-CONT or ONU. As such, it is beneficial to assign high AIR values to T-CONTs. However, the AIR values need to be chosen so that they can always be guaranteed to all T-CONTs within the optical network. This restricts the maximum value of the AIRs. For example, the effective aggregate upstream bandwidth for a GPON is approximately 1 Gbps. The maximum number of T-CONTs within a PON network may be 120 as the maximum number of ONUs may be 30, and each ONU may have at most 4 ports, each port corresponding to one T-CONT. In theory, this restricts the AIR value for each T-CONT to approximately 8.33 Mbps, as the guaranteed bandwidth should be attainable simultaneously for every T-CONT. In practice however, the number of active ONUs/T-CONTs is typically lower than the maximum, e.g. only 20% or 50% of the T-CONTs may be active. As such, the AIR values could have been configured much higher, namely, 44 Mbps or 17 Mbps, respectively.

By means of the computer-implemented method according to the present disclosure, the number of active T-CONTs may be tracked and the AIR values of the T-CONTs may be dynamically configured such that the AIR values are maximized. This is subject to the sum of all AIR values of the active T-CONTs not being larger than the available aggregate upstream bandwidth. In other words, the aggregate of the fixed and assured bandwidths within the optical network is at most equal to the total available bandwidth within the optical network. This can improve the QoS and/or latency of all T-CONTs in the network.

According to a second example embodiment, traffic descriptor parameter values can be dynamically updated according to the data volume consumed by a user. Internet subscriptions typically involve a maximum rate or peak rate, e.g. 100 Mbps, and a maximum data volume per month, e.g. 300 GB. The computer-implemented method according to the present disclosure allows tracking the data volume for each ONU or TCONT, and updating a traffic descriptor if the maximum data volume is achieved. In other words, the trigger condition may be an upper threshold for the data volume consumption. Updating the one or more traffic descriptor parameter values may, for example, include reducing the maximum bandwidth, reducing the priority for non-guaranteed bandwidth assignment, reducing the weight for non-guaranteed bandwidth assignment, reducing the assured bandwidth traffic descriptor parameter, or reducing the fixed bandwidth.

According to a third example embodiment, traffic descriptor parameter values can be dynamically updated to self-optimize one or more traffic descriptor parameters. As discussed above, initially provisioned traffic descriptor configurations can be wrong or suboptimal. The computer-implemented method according to the present disclosure allows tracking if configurations are suboptimal based on the monitored network metrics and allows overwriting these suboptimal traffic descriptor parameters with values that improve performance. For example, the queue fill of each T-CONT may be tracked. If the queue fill of a T-CONT is consistently too large, performance can be improved by reducing the DT traffic descriptor parameter or by increasing the values for the AIR, the fixed bandwidth, or the maximum bandwidth. In another example, the type of applications/services running over a T-CONT may be tracked, and the traffic descriptors parameter values may be updated accordingly to be more bandwidth efficient or performant. In yet another example, the latency may be tracked to detect traffic descriptor parameter configurations that are not ideal from a latency point of view, e.g. due to a suboptimal DT parameter configuration. As a result, the DT parameter may be update to a new value, thereby improving the latency.

According to a fourth example embodiment, traffic descriptor parameter values can be dynamically updated to improve the energy efficiency of the optical network. Some operators desire lower energy consumption during periods of lower expected network activity, e.g. overnight or during weekends. This can, for example, be achieved by updating the traffic descriptor parameter values as to reduce the bandwidths allocated to the T-CONTs during such predetermined periods of lower expected activity. Updating the one or more traffic descriptor parameter values may thus be based on a time schedule indicative for when lower or higher bandwidth assignments are desired, i.e. the time schedule may define the trigger events. In other words, the start and end of the 'night' according to the time schedule may trigger the updating of the traffic descriptor parameter values. Tracking the time of day as a network metric thus allows updating one or more traffic descriptor parameter values according to the time schedule. Alternatively, the traffic descriptor values may be updated during weekdays relative to the weekends, or during a high-impact event on the network such as, for example, an important sports event or software release.

According to a fifth example embodiment, traffic descriptor parameter values can be dynamically updated according to ODN switches. For ODN switching, the AIR values are typically configured to take the worst case scenario into account, i.e. where all ONUs are connected to a single OLT port. This limits the AIR configuration you can have in this network and thus the guaranteed assigned bandwidth when the ONUs are not connected to a single OLT port. The computer-implemented method according to the present disclosure can track the ODN switches and update the AIR values so as to configure an optimal value for the AIR according to the current connection of the ONUs to the OLT ports.

According to a sixth example embodiment, traffic descriptor parameter values can be dynamically updated according to end-user preferences. A user may, for example, indicate a preference for higher bandwidth or better latency performance. A better latency performance may, for example, be preferred for some gaming applications. A larger bandwidth assignment may, for example, be preferred in case of uploading large files. The computer-implemented method may thus comprise receiving such user preferences, e.g. from a mobile app. One or more traffic descriptor parameters may then be updated based on this user preference as to provide the desired higher bandwidth or better latency performance.

According to a seventh example embodiment, traffic descriptor parameter values can be dynamically updated to enable upstream bandwidth sharing optimization, BSO. Bandwidth sharing optimization is currently only available for downstream. Downstream BSO allows detecting or predicting that a PON is at risk of becoming congested. If so, a BSO algorithm identifies heavy users, e.g. performing a full-speed download for a long duration. The BSO algorithm then reduces the priority of the heavy user in the WFQ scheduler to provide a smaller portion of the available downstream capacity to the heavy user. In doing so, BSO ensures that light users on the same PON can be allocated sufficient bandwidth, e.g. to perform a speed test or short download, while the heavy user is active on the PON and the PON goes into congested mode.

To enable upstream BSO, the computer-implemented method according to the present disclosure may comprise tracking the data volume consumption of all ONUs or T-CONTs in the PON during predetermined periods. The data volume consumption of a client network node may sometimes also be referred to as bandwidth usage. One or more data volume consumptions may be tracked for a single ONU or T-CONT during respective predetermined periods. For example, a data volume consumption of a client network node may be obtained during a period of 5 minutes, an hourly period, a daily period, a weekly period, and a monthly period. It will be apparent that these periods of data volume consumption may partially overlap. This allows predicting if congestion is likely to occur. This further allows detecting heavy upstream users, i.e. ONUs that exceed an upper threshold for the bandwidth usage. The upper threshold may depend on the duration of the predetermined period. When congestion occurs, or when the network is at risk of becoming congested, one or more traffic descriptor parameter values of such heavy users can be updated to reduce the bandwidth allocated to the heavy user. This allows deprioritizing the heavy user in the upstream, thereby avoiding QoS decrease for the other users in the optical network.

Deprioritizing a heavy user can be achieved by assigning a lower priority or weight to a heavy user in the dynamic bandwidth allocation, e.g. lowering the priority for best effort bandwidth assignment or weight for best effort assignment according to the ITU-T G.9807.1 standard. This allows reducing the non-guaranteed bandwidth when the network is congested or at risk of being congested.

Alternatively, deprioritizing the heavy user can be achieved by an initial increase or scaling of the fixed bandwidth traffic descriptor parameter and/or the assured bandwidth traffic descriptor parameter and/or the maximum bandwidth traffic descriptor parameter for all T-CONTs. This allows preventively reducing the fixed bandwidth traffic descriptor parameter and/or the assured bandwidth traffic descriptor parameter and/or the maximum bandwidth traffic descriptor parameter of the heavy user when the network is at risk of congestion while respecting the assured bandwidth and maximum bandwidth. Alternatively, this can be achieved by increasing the assured bandwidth or the maximum bandwidth of the T-CONTs of the normal users, i.e. the non-heavy users with a bandwidth usage below the upper threshold. This allows implementing BSO in the upstream.

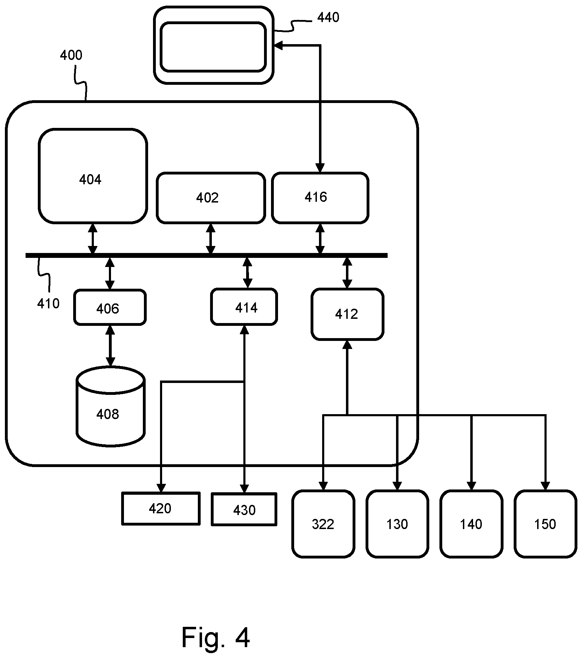

Fig. 4 shows a suitable computing system 400 enabling to implement embodiments of the computer-implemented method for optimizing bandwidth allocation in a P2MP optical network. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 400 to communicate with other devices and/or systems, for example with ONUs 130, 140, 150 and/or a memory 322. The communication interface 412 of computing system 400 may be connected to such a source node or destination node by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage element(s) 408 above is/are described as a local disk, in general any other suitable computer-readable media such as a removable magnetic disk, optical storage media such as a CD or DVD, ROM, disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. A computer-implemented method for optimizing bandwidth allocation within a point-to-multipoint, P2MP, optical network (100) comprising a central network node (110) configured to communicate with client network nodes (130, 140, 150); wherein transmission opportunities (133, 142, 143, 144, 154, 155) between the respective client network nodes and the central network node are allocated according to dynamic bandwidth allocation based on bandwidth demands of the respective client network nodes and constrained by traffic descriptor parameter values of the respective client network nodes; the computer-implemented method comprising:
- obtaining (301) one or more network metrics (310) indicative for a network architecture of the P2MP optical network or a network utilization of the P2MP optical network; and
- if (302) at least one network metric meets a trigger criterion, updating (303) one or more of the traffic descriptor parameter values to a new value based on one or more of the network metrics.

2. The computer-implemented method according to claim 1, further comprising iteratively obtaining the one or more network metrics and iteratively checking if at least one network metric meets the trigger criterion; or performing the updating as an interrupt service routine that is triggered if at least one network metric meets the trigger criterion.

3. The computer-implemented method according to any of the preceding claims, wherein the respective client network nodes comprise at least one traffic-bearing entity, and wherein upstream transmission opportunities for transmitting data from the at least one traffic-bearing entity to the central network node are allocated according to dynamic bandwidth allocation based on the bandwidth demand of the at least one traffic-bearing entity and constrained by traffic descriptor parameter values of the at least one traffic-bearing entity.

4. The computer-implemented method according to any of the preceding claims, wherein updating (303) one or more of the traffic descriptor parameter values further comprises adjusting the one or more traffic descriptor parameter values stored in a memory (322).

5. The computer-implemented method according to any of the preceding claims, wherein the one or more network metrics are selected from a group comprising:
- a number of active client network nodes (130, 140, 150) within the P2MP optical network (100);
- at least one data volume consumption of a client network node (130, 140, 150), indicative for an amount of data transferred between the client network node and the central network node (110) during a respective predetermined period;
- service information indicative for an application (171 - 176) serviced by a client network node (130, 140, 150);
- a queue fill indicative for an occupancy within a queue (131, 132, 141, 151, 152, 153) of a client network node or the central network node;
- a time of day; and
- a switching state of an optical distribution network, ODN, indicative for a configuration of the optical connections between the client network nodes and the central network node.

6. The computer-implemented method according to any of the preceding claims, wherein the one or more traffic descriptor parameters are selected from a group comprising:
- a fixed bandwidth indicative for a portion of the available bandwidth within the P2MP optical network assigned to a client network node regardless of its bandwidth demand;
- an assured bandwidth indicative for a portion of the available bandwidth within the P2MP optical network assigned to a client network node according to its bandwidth demand;
- a maximum bandwidth indicative for a maximum portion of the available bandwidth within the P2MP optical network assignable to a client network node;
- a priority for non-guaranteed bandwidth assignment indicative for the relative precedence of assigning additional bandwidth to a client network node under network congestion;
- a weight for non-guaranteed bandwidth assignment indicative for the distribution of additional bandwidth to client network nodes with the same priority;
- a jitter tolerance;
- a bandwidth assignment delay tolerance;
- a switching delay tolerance; and
- a delay tolerance indicative for a maximum time between consecutive upstream transmission opportunities of a client network node.

7. The computer-implemented method according to claim 4 and 5, wherein updating (303) one or more of the traffic descriptor parameter values comprises determining new values for the fixed bandwidth and the assured bandwidth based on the number of active client network nodes within the P2MP optical network such that a sum (213) of the fixed bandwidth and the assured bandwidth is maximized for the respective active client network nodes while an aggregate of the fixed and assured bandwidths within the P2MP optical network is at most equal to a total available bandwidth within the P2MP optical network.

8. The computer-implemented method according to claim 4, wherein obtaining (301) one or more network metrics comprises obtaining the data volume consumption during a predetermined period of the respective client network nodes (130, 140, 150); and wherein one or more of the traffic descriptor parameter values are updated so as to reduce a bandwidth allocated to a client network node, if the data volume consumption during a predetermined period of said client network node exceeds an upper threshold for the data volume consumption during a predetermined period and the P2MP optical network is congested or at risk of becoming congested.

9. The computer-implemented method according to claim 6 and 8, wherein updating (303) one or more of the traffic descriptor parameter values comprises increasing the assured bandwidth or the maximum bandwidth (214) of the client network nodes with a data volume consumption during a predetermined period below an upper threshold.

10. The computer-implemented method according to any of the preceding claims, wherein updating (303) one or more of the traffic descriptor parameter values is biased by a user preference for higher bandwidth or better latency.

11. The computer-implemented method according to any of the preceding claims, wherein one or more traffic descriptor parameter values are updated as to reduce the dynamically allocated bandwidth of one or more client network nodes during a predetermined period.

12. The computer-implemented method according to any of the preceding claims, wherein the P2MP optical network is a passive optical network, PON, comprising an optical line terminal, OLT, configured to communicate with optical network units, ONUs; and wherein the OLT comprises means configured to dynamically allocate bandwidth to the ONUs based on bandwidth demands of the respective ONUs and constrained by traffic descriptor parameter values of the respective ONUs.

13. A data processing system configured to perform the computer-implemented method according to any one of claims 1 to 12.

14. A computer program comprising instructions which, when the program is executed by a computer, cause the computer to perform the computer implemented method according to any one of claims 1 to 12.

15. A computer-readable medium comprising instructions which, when executed by a computer, cause the computer to perform the computer implemented method according to any one of claims 1 to 12.
